# EUROPEAN PATENT SPECIFICATION

(11) **EP 1 937 129 B1**
(45) Date of publication and mention of the grant of the patent: **23.02.2011**
(21) Application number: 06769282.2
(22) Date of filing: 14.07.2006
(51) Int. Cl.: A47L 9/16, A47L 9/10

(54) **HANDLE TYPE CYCLONE DUST-COLLECTING APPARATUS**
ZYKLONSTAUBSAUGER MIT GRIFF
DISPOSITIF DEPOUSSIEREUR A CYCLONE A POIGNEE

(30) Priority: 19.10.2005 KR 20050098760
(43) Date of publication of application: 02.07.2008
(73) Proprietor: Samsung Gwangju Electronics Co., Ltd., Gwangju-city 506-723 (KR)
(72) Inventor: OH, Jang-Keun, Gwangju-city 502-808 (KR); LEE, Hak-Bong, Jeollanam-do 517-811 (KR)
(74) Representative: Pratt, David Martin
(86) International application number: PCT/KR2006/002772
(87) International publication number: WO 2007/046578

(56) References cited:
- EP-A- 0 827 710
- EP-A- 1 199 023
- DE-A1-102004 026 768
- GB-A- 2 344 278
- KR-A- 20000 047 413
- KR-A- 20020 085 478
- KR-A- 20020 085 478
- KR-A- 20030 047 609
- KR-A- 20030 047 609
- KR-A- 20050 066 908

## Description

### Technical Field

The present invention relates to a cyclone dust-collecting apparatus for a vacuum cleaner, and more particularly, to a handle type cyclone dust- collecting apparatus, which is disposed at one side of an extension pipe of a vacuum cleaner, for centrifugally separating out dust particles from drawn-in air.

### Background Art

A cyclone dust-collecting apparatus rotates dust-entrained air drawn in through a suction brush of a vacuum cleaner and forms a whirling current, thereby separating out dust particles from the air.by using a centrifugal force. Recently, a handle type cyclone dust-collecting apparatus has been suggested. A general cyclone dust-collecting apparatus is disposed in a body of the vacuum cleaner to separate out dust particles from the drawn-in air and discharge cleaned air to the outside. However, it is theoretically impossible to completely separate out dust particles from the air. In attempt to solve this problem, the handle type cyclone dust-collecting apparatus has been developed. The handle type cyclone dust-collecting apparatus is mainly employed in a canister type vacuum cleaner, and it is disposed at one side of an extension pipe of the vacuum cleaner such that it can filter out the dust particles before the air drawn in through a suction brush flows into a cleaner body of the vacuum cleaner. A cyclone dust-collecting apparatus or a paper filter, which is disposed in the cleaner body, filters out small amount of dust particles and thus a dust-collection efficiency can be improved. Also, an overload exerted to a motor of the vacuum cleaner can be reduced. The handle type dust-collecting apparatus comprises a filter member disposed on an air discharge outlet thereof and having a plurality of fine passing holes. The air is discharged from the handle type cyclone dust- collecting apparatus through the fine passing holes, whereas the dust particles are filtered out by the fine passing holes. However, if the dust particles clog the fine passing holes, a suction force of the vacuum cleaner deteriorates. Korean Patent Publication No. 10-2000-47413 and British Patent Publication No. GB2402868 disclose a handle type cyclone dust-collecting apparatus having an improved structure to solve the above-mentioned problem. The disclosed handle type cyclone dust-collecting apparatus comprises a dust backflow prevention plate that is disposed at a lower end of the filter member to prevent dust particles from flowing back to the handle type cyclone dust-collecting apparatus. The dust backflow prevention plate prevents the backflow of the dust particles due to the ascending air current, and thus, the amount of dust particles to be filtered by the filter member can be decreased. Further handle type cyclone dust-collecting apparatuses are disclosed in DE 10 2004 026768 A1 and in GB-A-2 344 278.

### Disclosure of Invention

### Technical Problem

However, one problem with the dust backflow prevention plate is its relative inability to prevent backflow of fine dust particles. If the fine passing hole has a small size, the suction force of the vacuum cleaner is not smoothly transmitted. Therefore, the fine passing hole has to be designed to have a size sufficient to transmit the suction force smoothly. As a result, the fine dust particles may be attracted to the fine passing holes and, thus, they are likely to clog the filter member, which requires frequent replacement of the filter member. Accordingly, a research for improving a fine dust particles collection efficiency is being progressed. The handle type cyclone dust-collecting apparatus has many numbers of components, and in particular, has many number of components of a connection body to be connected to the extension pipe of the vacuum cleaner, which increases the number of assembling processes and causes a manufacturing cost to be increased.

### Technical Solution

The present invention has been developed in order to solve the above problems in the related art. An aspect of the present invention is to provide a handle type cyclone dust-collecting apparatus having an improved structure to improve a fine dust particles collection efficiency. Another aspect of the present invention is to provide a handle type dust-collecting apparatus which requires small number of assembling processes and achieves a cost-saving effect. The above aspects and other advantages are achieved by providing an handle type cyclone dust-collecting apparatus which is disposed at one side of an extension pipe of a vacuum cleaner, comprising a connection body fluidly communicating with the extension pipe and having an air inlet port and an air outlet port, a dust-collecting casing detachably connected with the connection body, and a filter member disposed at the air outlet port to prevent dust particles from being flowing back to the air inlet port with air, wherein the filter member comprises a filter body and a conical skirt connected to a lower end of the filter body and having a cut-off part formed in a certain section thereof, and wherein a gap between a lower end of the skirt and an inner surface of the dust-collecting casing ranges from 4mm to 6mm. The handle type cyclone dust-collecting apparatus according to the invention further comprises a rotation preventing rib formed to have a curved surface at a lower portion of the dust-collecting casing and protruding from a support shaft disposed at the center of the the dust-collecting casing toward an inside surface of the dust-collecting casing, for preventing the dust particles from rotating due to a whirling current of the air. The gap between the lower end of the skirt and the inner surface of the dust-collecting casing may be about 5mm. The connection body may comprise a first connection body fluidly communicating with a first extension pipe adjacent to a suction port of the vacuum cleaner and having the air inlet port; and a second connection body fluidly communicating with a second extension pipe adjacent to a body of the vacuum cleaner, an air discharge pipe downwardly protruding from the second connection body and having an air discharge port formed at a lower end of the air discharge pipe, and wherein the second connection body comprises an air guide member that is integrally formed with the air discharge pipe to enclose an outer circumference of the air discharge pipe and guides the air drawn in through the air inlet port to downwardly incline and move into the dust- collecting casing. The dust-collecting casing may comprise a protrusion formed at an upper end thereof and press-fitted into a connection recess formed at a lower end of the first connection body, and a sealing member is fixed to an upper end of the protrusion to seal a connection portion between the protrusion and the connection recess.

### Advantageous Effects

According to the present invention as described above, since the handle type cyclone dust-collecting apparatus has a gap between the lower end of the skirt of the filter member and the dust-collecting casing shorter than that in the related art, fine dust particles can be prevented from being scattered and thus backflow thereof can be prevented. Accordingly, a fine dust particle collection efficiency is improved. Also, since the air guide member, which is the downward spiral shape, is integrally formed with the connection body, the number of assembly parts is reduced and thus a cost-saving effect is achieved. Also, it is possible to increase a whirling force of the air flowing into the dust-collecting casing, which maximizes a centrifugal force. Also, since the sealing member is inserted to the upper end of the dust-collecting casing, an air-tightness is increased. Also, since the rotation preventing rib is disposed under the dust- collecting casing, the dust particles are prevented from being scattered and are compressed, which results in the improvement of the dust collection efficiency.

### Description of Drawings

The above aspects and features of the present invention will be more apparent by describing certain exemplary embodiments of the present invention with reference to the accompanying drawings, in which:

FIG. 1 is a perspective view illustrating a handle type cyclone dust- collecting apparatus according to an embodiment of the present invention;

FIG. 2 is an exploded perspective view illustrating the handle type cyclone dust-collecting apparatus of FIG. 1;

FIG. 3 is a bottom view illustrating a second connection body of FIG. 2;

FIG. 4 is a cross section view illustrating a connection portion for connecting the second connection body and a dust-collecting casing;

FIG. 5 is a plan view of the dust-collecting casing;

FIG. 6 is a plan view of a filter member disposed in the dust- collecting casing;

FIG. 7 is a graph showing dust-collection efficiency of the handle type cyclone dust-collecting apparatus employing the filter member according to an embodiment of the present invention and dust-collection efficiency of the conventional handle type cyclone dust-collecting apparatus; and

FIG. 8 is a cross section view of the handle type cyclone dust- collecting apparatus taken along the line VIII-VIII of FIG. 1 to explain the operation thereof.

### Best Mode

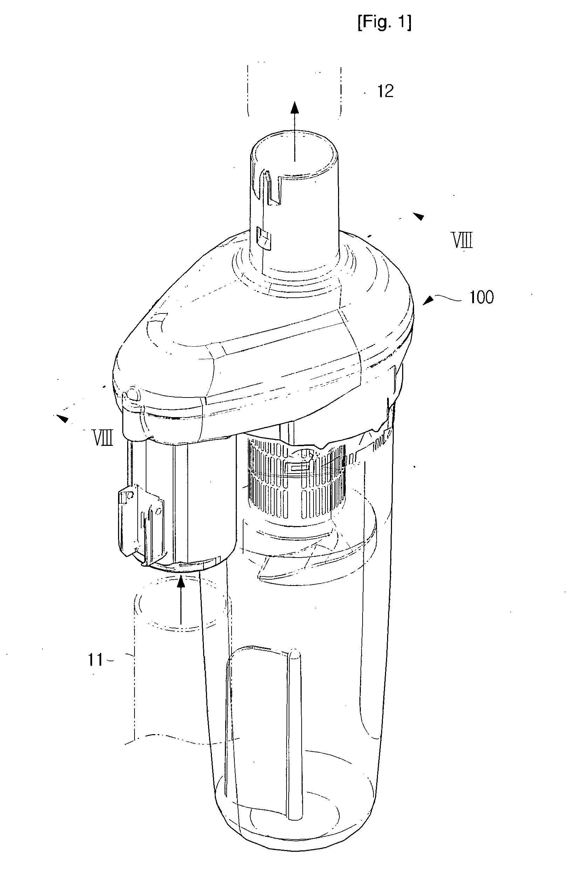

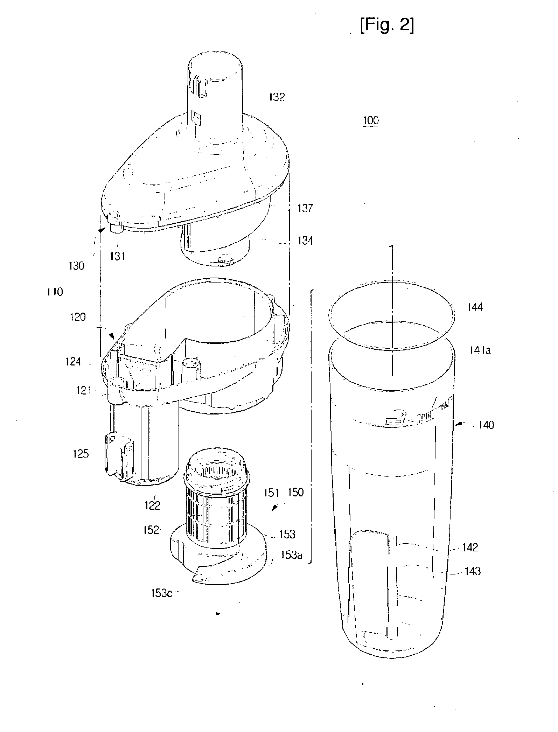

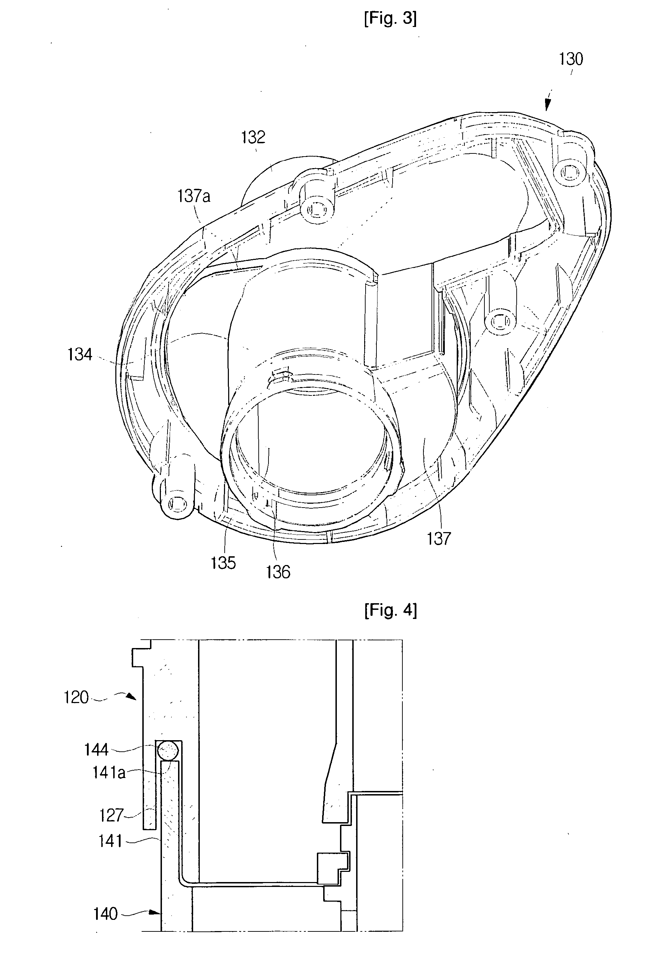

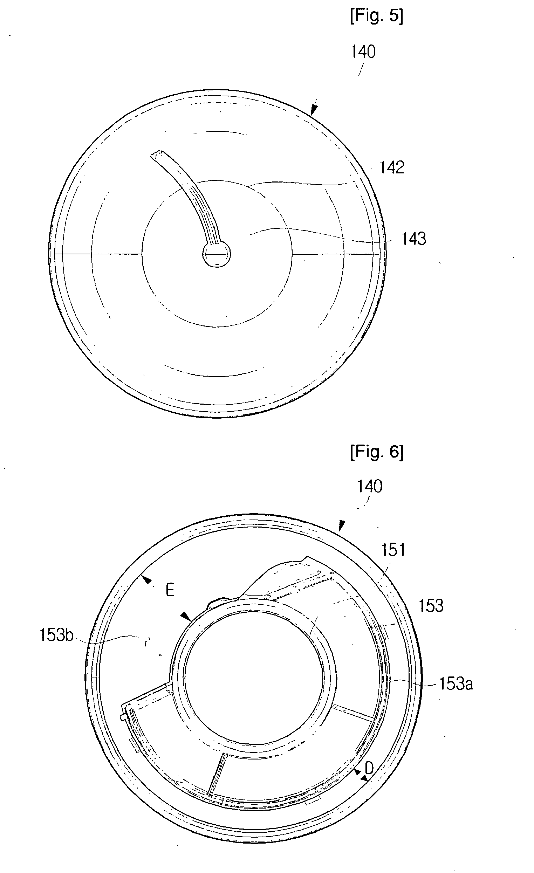

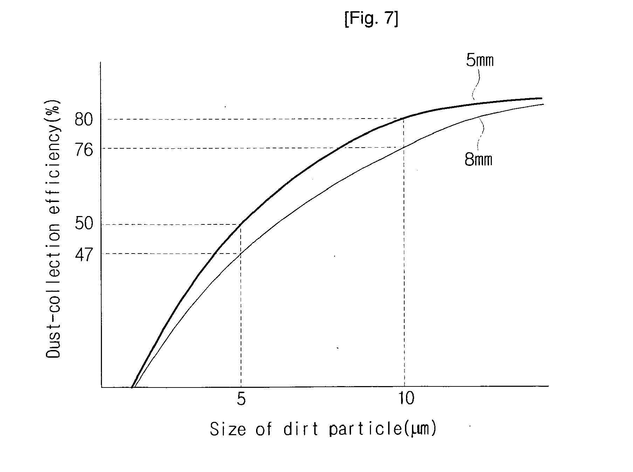

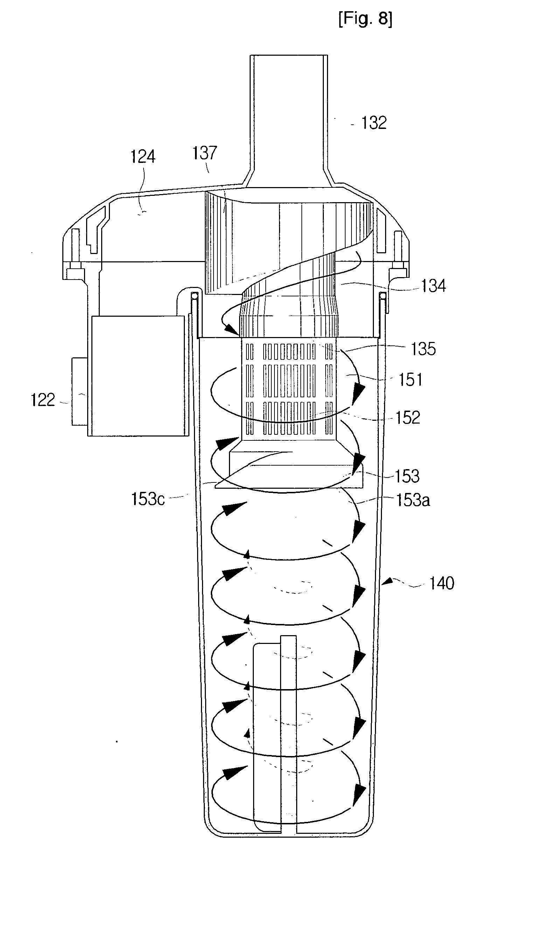

Hereinafter, a handle type cyclone dust-collecting apparatus according to an embodiment of the present invention will now be described with reference to the accompanying drawings. As shown in FIG. 1, a handle type cyclone dust-collecting apparatus 100 is connected to an extension pipe of a vacuum cleaner (not shown). The extension pipe includes a first extension pipe 11 connected to a suction brush (not shown) and a second extension pipe 12 connected to a cleaner body (not shown) provided with a suction force source. When the suction force source is driven by power supply, dust-entrained air is drawn into the handle type cyclone dust-collecting apparatus 100 through the suction brush (not shown) and the first extension pipe 11. The dust-removed air is discharged from the handle type cyclone dust-collecting apparatus 100 through the second extension pipe 12 and flows into the cleaner body (not shown). Referring to FIG. 2, the handle type cyclone dust-collecting apparatus 100 comprises a connection body 110 connected to the first and the second extension pipes 11, 12 to allow the air to flow in and out, a dust-collecting casing 140 detachably connected to the connection body 110, and a filter member 150 disposed in the dust-collecting casing 140. The connection body 110 comprises a first connection body 120 fluidly communicating with the first extension pipe 11 and a second connection body 130 fluidly communicating with the second extension pipe 12. The first and the second connection bodies 120, 130 are fastened to each other by screws. For the screw-fastening, the first and the second connection bodies 120, 130 have a plurality of fixing bosses 121, 131, respectively, having screw holes and corresponding to each other. A dismounting protrusion or dismounting recess may be formed in the first and the second connection bodies 120, 130 to be connected with the first and the second extension pipes 11, 12, and, a corresponding dismounting recess or dismounting protrusion may be formed in the first and the second extension pipes 11, 12. A first connection pipe 120 downwardly protrudes from the first connection body 120 to be connected with the first extension pipe 11, and an air inlet port 124 is formed in the first connection body 120 to fluidly communicate with the first connection pipe 122. The dust-collecting casing 140 is detachably connected with a lower end of the first connection body 120. An accessory bracket 125 is formed at an exterior of the first connection pipe 122 to mount and dismount an accessory part. Referring to FIGS. 2 and 3, a second connection pipe 132 upwardly protrudes from the second connection body 130 to be connected with the second extension pipe 12. An air discharge pipe 134 downwardly protrudes from the second connection body 130 to fluidly communicate with the second connection pipe 132. The air discharge pipe 134 may be integrally formed with the second connection body 130. An air discharge port 135 is formed in a lower end of the air discharge pipe 134. Accordingly, the air separated out from dust particles in the dust-collecting casing 140 passes through the air discharge port 135 and the air discharge pipe 134 and is discharged through the second connection pipe 132. A plurality of connection protrusions 136 are formed around an inner surface of a lower end of the air discharge pipe 134 to be connected with the filter member 150. An air guide member 137 is formed on an outer circumference of the air discharge pipe 134. The air guide member 137 may be integrally formed with the air discharge pipe 134. As described above, since the air discharge pipe 134 and the air guide member 137 are integrally formed with the second connection body 130, the number of assembly processes of the handle type cyclone dust-collecting apparatus 100 decreases, which reduces a manufacturing cost. The air guide member 137 has a width gradually increasing toward a lower portion and continuously encloses the outer circumference of the air discharge pipe 134. The air guide member 137 is in the shape of a unfilled duct or a filled wall. If the air guide member 137 is in the shape of the unfilled duct, the air is guided into the unfilled duct, and if the air guide member 137 is in the shape of the filled wall, the air is guided to the bottom. The air guide member 137 has one end 137a fluidly communicating with the air inlet port 124. Accordingly, the air drawn in through the air inlet port 124 is guided by the air guide member 137 and flows into the dust- collecting casing 140, while forming a spiral air current downwardly advancing (see FIG. 8). As the air flows into the dust-collecting casing 140 by being guided by the air guide member 137, its swirling current increases and thus maximizes a centrifugal force exerted to the dust particles included in the air. Accordingly, the dust particles are separated out from the air very effectively and a dust-collection efficiency can be improved. In a conventional handle type cyclone dust-collecting apparatus, air flows into a dust-collecting case and thereby forms a swirling current. However, an inclination of the air is slight, which results in a weaker swirling force. According to the present invention, the air guide member 137 maximizes a swirling force of the air flowing into the dust-collecting casing 140, thereby improving a dust-collection efficiency. FIG. 4 is a cross section of a connecting portion between the dust- collecting casing 140 and the first connection body 120. Referring to FIGS. 2 and 4, the dust-collecting casing 140 is detachably connected with the first connection body 120. The dust-collecting casing 140 is connected with the first connection body 120 to allow the drawn-in air to be rotated and to form a whirling current. The dust particles separated out from the air by a centrifugal force generated by the whirling current are collected in the dust-collecting casing 140. A protrusion 141 is formed on an upper end of the dust-collecting casing 140 and press-fitted into a connection recess 127 formed in a lower portion of the first connection body 120. An annular sealing member 144 is fixed to an upper end 141 a of the protrusion 141 by adhesive. The sealing member 144 is made of various materials, and preferably, made of rubber material. The sealing member 144 seals the connection portion between the upper end 141a of the protrusion 141 and the connection recess 127. Referring to FIGS. 2 and 5, a rotation preventing rib 142 is disposed inside the dust-collecting casing 140. The rotation preventing rib 142 protrudes from a supporting shaft 143. The rotation preventing rib 142 has a curved surface to reduce a friction against air. The rotation prevention rib 142 prevents the dust particles stacked in the dust-collecting casing 140 from being rotated by the whirling current of the air. More specifically, the rotation preventing rib 142 prevents the dust particles stacked on the bottom of the dust-collecting casing 140 from being scattered. In addition, the rotation preventing rib 142 compresses the dust particles such that larger amount of dust particles can be collected in the dust-collecting casing 140. Referring to FIG. 2 and 6, the filter member 150 is inserted into the dust-collecting casing 140 to prevent the dust particles from flowing back to the air inlet port 124 through the air guide member 124 together with the air discharged through the air discharge port 135 (see FIG. 3). The filter member 150 comprises a filter body 151 and a skirt 153. An upper end of the filter body 151 is connected with a lower end of the air discharge pipe 134 (see FIG. 3) having the air discharge port 135, and the filter body 151 is directed toward a lower side of the air discharge pipe 134 and extends toward the inside of the dust-collecting casing 140. A plurality of fine passing holes 152 are formed on the filter body 151 to allow the air to pass therethrough. The skirt 153 has an upper end connected to the lower end of the filter body 151 and is in a conical shape to have a diameter gradually increasing toward a lower end 153a. A cut-off part 153b is formed in a certain section of the skirt 153. Relatively large dust particles, separated out from the air, drop down to the bottom of the dust- collecting casing 140 through the cut-off part 153b. The skirt 153 forms an inclined part 153c downwardly inclined and adjacent to the cut-off part 153b, so that air and dust drawn in the dust- collecting casing 140 can be smoothly guided towards the bottom of the dust- collecting casing. The inclined part 153c may be inclined toward the direction corresponding to a flow of air swirling downward. A gap 'D' between an edge of the lower end 153a of the skirt 153 and the inner surface of the dust-collecting casing 140 is from 4mm to 6mm, and more preferably, is about 5mm. In the conventional handle type cyclone dust- collecting apparatus, a gap D is about 8mm. That is the gap D is smaller than that of the conventional apparatus such that the fine dust particles stacked on the bottom of the dust-collecting apparatus are prevented from flowing back through the gap D. If the gap D is narrower than 4mm, a suction force is not smoothly transmitted. A gap 'E' between the edge of the lower end 153b of the skirt 153 at the cut-off part 153b and the inner surface of the dust-collecting casing 140 is about 12mm (millimeters). FIG. 7 is a graph showing a fine dust particles collection efficiency of the handle type cyclone dust-collecting apparatus according to an embodiment of the present invention, which has the gap D of about 5mm, and a fine dust particles collection efficiency of the conventional handle type cyclone dust-collecting apparatus, which has the gap D of about 8mm. If the size of dust particle is about 5µm (micrometers), the conventional apparatus, which has the gap of about 8mm, has a dust collection efficiency of 47%, and the handle type cyclone dust-collecting apparatus according to an embodiment of the prevent invention, which has the gap D of about 5mm, has a dust- collection efficiency of 50%. If the size of the dust particles is about 10µm, the conventional apparatus has a dust-collection efficiency of 76% and the handle type cyclone dust-collecting apparatus according to an embodiment of the present invention has a dust-collection efficiency of 80%. According to the present invention, the dust-collection efficiency of the dust particle below 10µm is improved by 5% compared to that of the conventional apparatus. If the dust particles is larger than 10µm there is no noticeable improvement in dust-collection efficiency between the present invention and the related art. Hereafter, operation of the handle type cyclone dust-collecting apparatus 100 according to an embodiment of the present invention will now be described in detail. When a power is supplied, a suction force is generated by the driving of a suction force source (not shown) mounted in the cleaner body such that dust-entrained air is drawn in through the suction brush (not shown) and flows into the air inlet port 124 through the first connection pipe 122. The drawn-in air is downwardly inclined by the air guide member 137 and flows into the dust-collecting casing 140. The air descends, forming a whirling current. During this process, the dust particles are concentrated toward the inner wall of the dust-collecting casing 140 and descend along the inner wall, thereby being collected on the bottom of the dust-collecting casing 140. Then, the air changes its direction, moves up, passes between the lower end 153a of the skirt 153 and the inner surface of the dust-collecting casing 140, passes through the fine passing holes 152 of the filter body 151, and then is discharged through the air discharge port 135. At this time, the dust particles included in the ascending air are filtered by the lower end 153a of the skirt 153 and the filter body 151 such that the dust particles move down and are collected on the bottom of the dust-collecting casing 140. The air discharged through the air discharge port 135 escapes from the handle type cyclone dust-collecting apparatus 100 through the air discharge pipe 134 and the second connection pipe 132 and flows into the cleaner body (not shown). The vacuum cleaner performs the same dust-collecting operation as that of a general vacuum cleaner.

### Mode for Invention

### Industrial Applicability

[17] The present invention relates to a cyclone dust-collecting apparatus for a vacuum cleaner, and more particularly, to a handle type cyclone dust- collecting apparatus, which is disposed at one side of an extension pipe of a vacuum cleaner, for centrifugally separating out dust particles from drawn-in air.

## Claims

1. A handle type cyclonic dust-collecting apparatus (100) which is disposed at one side of an extension pipe of a vacuum cleaner, the apparatus comprising:
a connection body (110) for fluidly communicating with the extension pipe, the connection body having an air inlet port (124) and an air outlet port;
a dust-collecting casing (140) detachably connected with the connection body; and
a filter member (150) disposed at the air outlet port for preventing dust particles from flowing back to the air inlet port with air,
wherein the filter member comprises a filter body (151) and a conical skirt (153) connected to a lower end of the filter body and having a cut-off part (153b) formed in a section thereof,
**characterised by** a gap between a lower end of the skirt and an inner surface of the dust-collecting casing, the gap having a range of from 4 mm to 6 mm, and
a rotation-preventing rib (142) formed to have a curved surface at a lower portion of the dust-collecting casing and protruding from a support shaft (143) disposed at the centre of the dust-collecting casing towards an inside surface of the dust-collecting casing, the rotation-preventing rib preventing dust particles from being rotating by a whirling current of air.

2. Apparatus as claimed in claim 1, wherein the skirt (153) forms an inclined part (153c) downwardly inclined and adjacent to the cut-off part (153b), so that air and dust drawn in the dust-collecting casing (140) can be smoothly guided towards the bottom of the dust-collecting casing.

3. Apparatus as claimed in claim 2, wherein the inclined part (153c) is inclined towards a direction corresponding to the flow of air swirling downwardly.

4. Apparatus as claimed in any one of claims 1 to 3, wherein the gap between the lower end of the skirt (153) and the inner surface of the dust-collecting casing (140) is substantially 5 mm.

5. Apparatus as claimed in any one of claims 1 to 4, wherein the connection body (110) comprises a first connection body (120) for fluidly communicating with a first extension pipe (11) adjacent to a suction port of the vacuum cleaner, the first connection body having the air inlet port (124); and a second connection body (130) for fluidly communicating with a second extension pipe (12) adjacent to the body of the vacuum cleaner, the second connection body having an air discharge pipe (134) protruding downwardly therefrom, and having an air discharge port (135) formed at a lower end of the air discharge pipe, and
wherein the second connection body comprises an air guide member (137) that is integrally formed with the air discharge pipe to enclose an outer circumference of the air discharge pipe, the air guide member guiding the air drawn in through the air inlet port to incline downwardly and move into the dust-collecting casing (140).

6. Apparatus as claimed in claim 5, wherein the dust-collecting casing (140) comprises a protrusion (141) formed at an upper end thereof, the protrusion being press-fitted into a connection recess (127) formed at a lower end of the first connection body (120), and the dust-collecting casing further comprising a sealing member (144) fixed to an upper end of the protrusion to seal a connection portion between the protrusion and the connection recess.

## Patentansprüche

1. Griffstück-Zyklon-Staubsammelgerät (100), das an einer Seite eines Verlängerungsrohrs eines Staubsaugers angeordnet ist, wobei das Gerät enthält:
einen Verbindungskörper (110) zur Fließverbindung mit dem Verlängerungsrohr, wobei der Verbindungskörper eine Lufteinlassöffnung (124) und eine Luftauslassöffnung aufweist,
ein Staubsammelgehäuse (140), das lösbar mit dem Verbindungskörper verbunden ist, und
ein Filterelement (150), das an der Luftauslassöffnung angeordnet ist, um Staubteilchen daran zu hindern, mit Luft zurück zur Lufteinlassöffnung zu strömen,
wobei das Filterelement einen Filterkörper (151) und eine konische Schürze (153), die mit einem unteren Ende des Filterkörpers verbunden ist und einen in einem Teilabschnitt davon ausgebildeten Ausschnittteil (153b) aufweist,
**gekennzeichnet durch** eine Lücke zwischen einem unteren Ende der Schürze und einer Innenfläche des Staubsammelgehäuses, wobei die Lücke im Bereich von 4 mm bis 6 mm liegt, und
eine Drehverhinderungsrippe (142), die so ausgebildet ist, dass sie an einem unteren Teilbereich des Staubsammelgehäuses eine gekrümmte Fläche aufweist und von einer in der Mitte des Staubsammelgehäuses angeordneten Haltestange (143) zu einer Innenfläche des Staubsammelgehäuses hin absteht, wobei die Drehverhinderungsrippe verhindert, dass Staubteilchen **durch** eine Luft-Wirbelströmung in Drehung versetzt werden.

2. Gerät nach Anspruch 1, bei dem die Schürze (153) einen geneigten Teil (153c) bildet, der nach unten geneigt und dem Ausschnittteil (153b) benachbart ist, so dass Luft und Staub, die in das Staubsammelgehäuse (140) gezogen werden, sanft zum Boden des Staubsammelgehäuses geleitet werden.

3. Gerät nach Anspruch 2, bei dem der geneigte Teil (153c) zu einer der Strömung nach unten wirbelnder Luft entsprechenden Richtung hin geneigt ist.

4. Gerät nach einem der Ansprüche 1 bis 3, bei dem die Lücke zwischen dem unteren Ende der Schürze (153) und der Innenfläche des Staubsammelgehäuses (140) im Wesentlichen 5 mm beträgt.

5. Gerät nach einem der Ansprüche 1 bis 4, bei dem der Verbindungskörper (110) einen ersten Verbindungskörper (120) zur Fließverbindung mit einem an eine Saugöffnung des Staubsaugers anschließenden ersten Verlängerungsrohr (11) enthält, wobei der erste Verbindungskörper ein Lufteinlassrohr (124) aufweist, und ferner einen zweiten Verbindungskörper (130) zur Fließverbindung mit einem an einen Körper des Staubsaugers anschließenden zweiten Verlängerungsrohr (12), wobei der zweite Verbindungskörper ein davon nach unten abstehendes Luftaustrittsrohr (134) und eine am unteren Ende des Luftaustrittsrohrs ausgebildete Luftaustrittsöffnung (135) aufweist, und
wobei der zweite Verbindungskörper ein Luftführungselement (137) enthält, das integral mit dem Luftaustrittsrohr ausgebildet ist, so das es einen Außenumfang des Luftaustrittsrohrs umschließt, wobei das Luftführungselement die eingesaugte Luft durch die Lufteinlassöffnung leitet, so dass sie sich nach unten geneigt in das Staubsammelgehäuse (140) hinein bewegt.

6. Gerät nach Anspruch 5, bei dem das Staubsammelgehäuse (140) einen an einem oberen Ende davon ausgebildeten Vorsprung (141) enthält, wobei der Vorsprung in eine an einem unteren Ende des ersten Verbindungskörpers (120) Verbindungsvertiefung (127) eingepresst wird, und das Staubsammelgehäuse darüber hinaus ein Dichtungselement (144) enthält, das an einem oberen Ende des Vorsprungs fixiert ist, so dass ein Verbindungsteilebereich zwischen dem Vorsprung und der Verbindungsvertiefung abgedichtet wird.

## Revendications

1. Appareil dépoussiérateur à cyclone à poignée (100) disposé sur un côté d'un tuyau prolongateur d'un aspirateur, l'appareil comprenant :
un corps de raccordement (110) pour communiquer de façon fluide avec le tuyau prolongateur, le corps de raccordement ayant un orifice d'entrée d'air (124) et un orifice de sortie d'air ;
un réceptacle collecteur de poussière (140) relié de manière détachable au corps de raccordement ; et
une membrure de filtre (150) disposée au niveau de l'orifice de sortie d'air pour empêcher les particules de poussière de revenir avec l'air dans l'orifice d'entrée d'air,
dans lequel la membrure de filtre comprend un corps de filtre (151) et une jupe conique (153) connectée à une extrémité inférieure du corps de filtre et ayant une partie découpée (153b) formée dans une section dans ledit corps,
**caractérisé par** un intervalle entre une extrémité inférieure de la jupe et une surface intérieure du réceptacle collecteur de poussière, cet intervalle ayant une valeur allant de 4 mm à 6 mm, et
une nervure d'empêchement de rotation (142) formée pour présenter une surface incurvée en une portion inférieure du réceptacle collecteur de poussière et saillant par rapport à un arbre support (143) disposé au centre du réceptacle collecteur de poussière vers une surface intérieure du réceptacle collecteur de poussière, la nervure d'empêchement de rotation empêchant les particules de poussière d'être mises en rotation par un courant d'air tourbillonnant.

2. Appareil selon la revendication 1, dans lequel la jupe (153) forme une partie inclinée (153c) inclinée vers le bas et adjacente à la partie découpée (153b), de sorte que l'air et la poussière aspirés dans le réceptacle collecteur de poussière (140) peuvent être guidés de façon régulière vers le bas du réceptacle collecteur de poussière.

3. Appareil selon la revendication 2, dans lequel la partie inclinée (153c) est inclinée vers une direction correspondant à l'écoulement d'air tourbillonnant vers le bas.

4. Appareil selon l'une des revendications 1 à 3, dans lequel l'intervalle entre l'extrémité inférieure de la jupe (153) et la surface intérieure du réceptacle collecteur de poussière (140) est pour l'essentiel de 5 mm.

5. Appareil selon l'une des revendications 1 à 4, dans lequel le corps de raccordement (110) comprend un premier corps de raccordement (120) pour communiquer de façon fluide avec un premier tuyau d'extension (11) adjacent à un port d'aspiration de l'aspirateur, le premier corps de connexion ayant l'orifice d'entrée d'air (124) ; et un second corps de raccordement (130) pour communiquer de façon fluide avec un second tuyau prolongateur (12) adjacent au corps de l'aspirateur, le second corps de raccordement ayant un tuyau d'évacuation d'air (134) saillant vers le bas depuis ce corps et ayant un orifice d'évacuation d'air (135) formé à une extrémité inférieure du tuyau d'évacuation d'air, et
dans lequel le second corps de connexion comprend une membrure de guidage d'air (137) qui est intégralement formée avec le tuyau d'évacuation d'air pour englober une circonférence extérieure du tuyau d'évacuation d'air, la membrure de guidage d'air guidant l'air aspiré par l'orifice d'entrée d'air pour s'incliner vers le bas et rentrer dans le réceptacle collecteur de poussière (140).

6. Appareil tel que revendiqué dans la revendication 5, dans lequel le réceptacle collecteur de poussière (140) comprend une saillie (141) formée à l'une de ses extrémités supérieures, la saillie étant montée par pression dans un renfoncement de raccordement (127) formé à une extrémité inférieure du premier corps de raccordement (120), et le réceptacle collecteur de poussière comprenant en outre une membrure d'étanchéité (144) fixée sur une extrémité supérieure de la saillie pour étanchéifier une partie de connexion entre la saillie et le renfoncement de connexion.
